Europäisches Patentamt

European Patent Office

Office européen des brevets

(11) Publication number: **0 403 553 B1**

## EUROPEAN PATENT SPECIFICATION

(45) Date of publication of patent specification: **29.12.93**  (51) Int. Cl.⁵: **A21D  8/04**

(21) Application number: **89903873.1**

(22) Date of filing: **09.03.89**

(86) International application number:
**PCT/US89/00959**

(87) International publication number:
**WO 89/08403 (21.09.89 89/23)**

(54) **METHOD FOR RETARDING STALING OF BAKING PRODUCTS.**

(30) Priority: **11.03.88 US 166926**

(43) Date of publication of application:
**27.12.90 Bulletin  90/52**

(45) Publication of the grant of the patent:
**29.12.93 Bulletin  93/52**

(84) Designated Contracting States:
**AT BE CH DE FR GB IT LI NL SE**

(56) References cited:
**US-A- 2 615 810**
**US-A- 2 665 215**
**US-A- 4 320 151**
**US-A- 4 416 903**

**New Approaches to Research on Cereal Carbohydrates, published by Science Publishers, Amsterdam, 1985, Hansen: "Industrial Application possibilities for an acid-stable alpha-amylase from Aspergillus Niger", Pages 211-216**

(73) Proprietor: **ENZYME BIO-SYSTEMS LTD.**
**International Plaza**
**P.O. Box 8000**
**Englewood Cliffs, N.J. 07632(US)**

(72) Inventor: **KRAUS, J., Kevin**
**173 Engle Street**
**Tenafly, NJ 07670(US)**
Inventor: **HEBEDA, Ronald, E.**
**61 Starling Lane**
**Naperville, IL 60565(US)**

(74) Representative: **Lederer, Franz, Dr. et al**
**Lederer, Keller & Riederer,**
**Patentanwälte,**
**Lucile-Grahn-Strasse 22**
**D-81675 München (DE)**

Rank Xerox (UK) Business Services
(3. 10/3.6/3.3. 1)

**Description**

BACKGROUND OF THE INVENTION

1. FIELD OF THE INVENTION

This invention relates to the use of certain enzyme compositions which may be incorporated in a dough to improve softness and retard staling of bakery products.

2. DESCRIPTION OF THE PRIOR ART

The phenomenon of bread staling is not completely understood. The staling of bread is usually related to the retrogradation of starch, or the association of starch molecules to form areas of crystallinity which result in an increase in firmness of the bread with the passage of time. Staling is of considerable economic importance to wholesale bakeries since it limits the shelf life of baked goods in retail outlets to about 3 or 4 days, plus several additional days in the home of the consumer after purchase. The short shelf life of the baked goods has required wholesale bakeries to have separate distribution systems that operate independently of the usual channels for packaged food distribution. In addition, the market area of a bakery is generally limited by the maximum radius the distribution system can cover within 24 hours.

Cereal chemists and bakery technologists have found that various chemical emulsifiers have some influence in extending the shelf life of baked goods, such as bread. However, chemical emulsifiers are only partially effective in reducing bread staling. Monoglycerides and other emulsifiers have been added to bread to improve its softness. Although these emulsifiers produce a softer bread, they have little influence in reducing the rate of bread staling. The term "baked goods" also connotes application to such products as rolls, muffins, biscuits, donuts, crackers and cake.

Enzymes of various types have been used in baked goods and some have been used for the specific purpose of inhibiting staling.

Cereal alpha-amylase enzyme in the form of malted barley is commonly added to wheat flour for bread to standardize its baking performance. Cereal alpha-amylase is most active at a pH of about 6 and a temperature of about 70 to 75°C.

"Fungal alpha-amylase" enzyme as the term is used in the baking and enzyme industries, generally relates to enzymes made from Aspergillus oryzae, and can also be used to standardize baking performance. The enzyme is most active at a pH of about 6 and a temperature of about 50 to 55°C.

"Bacterial alpha-amylase" enzyme as the term is used in the baking and enzyme industries, most often refers to enzymes made from Bacillus subtilis, which are used to inhibit staling. The enzyme is most active at a pH of about 7 and a temperature of about 75 to 80°C.

The "acid stable microbial alpha-amylase" enzyme is distinct from the cereal, fungal and bacterial alpha-amylases referred to above. It is most active at a pH of about 4 and a temperature of about 65 to 70°C.

One enzymatic approach to retarding bread staling is disclosed in U.S. Patent No. 2,615,810 to Stone and involves the use of a heat-stable bacterial alpha-amylase enzyme to attack gelatinized starch granules during baking.

A refinement to Stone's approach is described in U.S. Patent 4,299,848 to DeStefanis et al. which discloses a process for the inactivation of the proteolytic enzymes present in commercially available heat stable bacterial alpha-amylase enzyme preparations obtained from extracts of Bacillus subtilis, Bacillus sterothermophilis or other microbial sources.

A further refinement is given in U.S. Patent 4,654,216 to Carroll et al. which discloses the use of heat stable bacterial amylase in conjunction with pullulanase to overcome the problems of the Stone and DeStefanis et al. approaches. Carroll et al. further disclose that the baking art generally classifies alpha-amylases according to their source, as bacterial, fungal and cereal, also noting that the fungal amylases exhibit relatively low thermal stability and deactivate rapidly above 65°C. Thus, fungal amylases are not contemplated for practice of Carroll et al.'s invention which comprises the addition of an enzyme mixture of cereal or bacterial alpha-amylase and a pullulanase to dough in proportions of from 0.25 to 5 SKB (alpha-amylase units) and 5 to 75 PUN (debranching enzyme units) per 100 grams of flour.

A drawback of the Stone, DeStefanis et al. and Carroll et al. approaches is the tendency of thermally stable bacterial and cereal alpha-amylases to remain active too long during baking and to cause gumminess in the finished product. As a result, these approaches require a degree of control over dosages and enzyme ratios which may be impractical to apply commerically.

U.S. Patent 4,320,151 to Cole discloses that the thermal stability of a fungal alpha-amylase is substantially increased by dispersing aqueous solutions of the enzyme in concentrated sugar solutions. The sugar protected fungal alpha-amylase enzyme survives incorporation in a dough and remains active until a temperature is achieved at which starch gelatinization occurs. Thus, the sugar protected fungal alpha-amylase solutions retain their starch hydrolyzing activity, even when heated to temperatures well above those at which the enzyme would normally be completely denatured. However, the processing and ingredient changes required make this approach unsuitable for a number of bakery applications.

Canadian Patent No. 880,703 to Grampp et al. discloses a thermolabile bacterial alpha-amylase that would not be prone to the gumminess problem of conventional bacterial alpha-amylases. However, this enzyme is not sufficiently temperature stable to inhibit staling and is not acid stable.

G. Bussiere et al. in "The Utilization of Alpha-Amylase and Glucoamylase in Industrial Baking Technology", Annales De Technologie Agricole, volume 23 (2) pages 175 to 189 (1974) discloses studies on the role of alpha-amylases of bacterial origin and glucoamylase in bread making technology. This reference teaches that only alpha-amylases of bacterial origin are effective to retard staling.

None of the alpha-amylases disclosed in the above cited references are acid stable.

## SUMMARY OF THE INVENTION

The present invention is based upon the discovery that certain acid-stable microbial alpha-amylase enzymes retard the staling of baked goods without causing gumminess or adversely affecting the organoleptic characteristics of the baked goods. More specifically, the present invention provides a process for making bakery products that will provide resistance to staling by adding to the dough an acid-stable microbial alpha-amylase enzyme having an optimum activity at a pH of 3.0 to 5.0 at a temperature of 60 to 70°C.

## DESCRIPTION OF THE PREFERRED EMBODIMENTS

In accordance with the present invention, it has been found that the acid-stable microbial alpha-amylase enzyme retards the staling of baked products without causing gumminess or adversely affecting the other organoleptic properties of the baked goods.

The acid-stable enzyme used in this invention is an enzyme derived from black Aspergilli and has an optimum activity at a pH of 3 to 5, preferably 3.5 to 4.5, at a temperature of 60 to 70°C, preferably 65 to 70°C. In addition, the inventive enzyme survives incorporation in a dough and remains active at temperatures above about 60°C wherein starch gelatinization occurs, without the necessity for sugar protection as disclosed in U.S. Patent 4,320,151 to Cole. The enzyme is completely inactivated at higher temperatures above about 70°C which occur later during the baking process and thus has no tendency to excessively hydrolyze starch and cause gumminess in the finished baked goods product.

The enzyme is derived from black Aspergilli. Examples of black Aspergilli include Aspergillus awamori, Aspergillus usami, Aspergillus niger, Aspergillus saitoi, Aspergillus inui, Aspergillus aureus, and Aspergillus nakazawai.

It is commonly known that the aforesaid Aspergilli also produce a glucoamylase enzyme as well as an alpha-amylase enzyme which loses its activity under acidic conditions. In 1963, Y. Minoda et al., reported that when black Aspergilli were cultivated at appropriate conditions, they were able to produce an acid-stable alpha-amylase enzyme that showed dextrinizing activity even after acid treatment at a pH of 2.5 at 37°C for 30 minutes (Agr. Biol. Chem., Volume 27, No. 11, pages 806 to 811, 1963 (part 1); Volume 32, No. 1, Pages 104 to 109, 1968 (part 2); Volume 32, No. 1, pages 110 to 113 (part 3). Methods for producing acid-stable alpha-amylases by cultivating different black Aspergilli are disclosed in European Patent Application 138,428 to Heidt-Hanson et al. and Canadian Patent 663,274 to Yamada et al.

The properties of the acid-stable alpha-amylase in various species of black Aspergilli have received widespread attention and study, for example, G. K. Kvesitadze et al., "Acid-Stable and Acid-Labile Alpha Amylases of Mold, fungi Aspergillus", BIOCHEMISTRY USSR, 43 (9) part 2, pages 1330 to 1336 (1978); Y. Minoda et al. "The Structure And The Function Of The Acid-Stable Alpha-Amylase of Black Aspergilli", DENPUN KAGAKU (Journal of the Japanese Society of Starch Science, volume 21, No. 3, pages 172 to 189 (1974); L. B. Wingard Jr. et al., editor "Applied Biochemistry and Bioengineering" volume 2 - Enzyme Technology, page 61, (Academic Press 1979); T. T. Hansen, "Industrial Application possibilities for an Acid-Stable Alpha-Amylase from Aspergillus Niger", NEW APPROACHES TO RESEARCH ON CEREAL CARBOHYDRATES, pages 211 to 216 (Elsevier Science Publishers, Amsterdam, 1985).

European Patent Application 140,410 to Ducroo et al. discloses the isolation of a microbial acid amylase from amyloglucosidase, preferably Aspergillus niger. The acid amylase effects optimum saccharification at a pH between 3.5 and 5.0 at temperatures from about 60 to 75°C and is stable over a period of several months under ordinary storage conditions.

Activity of the acid stable alpha-amylase is determined by the following iterative assay method. An aqueous solution of the acid stable alpha-amylase is prepared containing an estimated 0.04-0.10 alpha-amylase units (AU) per milliliter (ml). One ml of the enzyme solution is added to 4.0 ml of a 60°C, 1.25% starch solution containing 0.125 molar (M) acetate buffer at pH 3.8. After exactly 3 minutes, a 1.0 ml aliquot is removed from the reaction mixture, immediately added to 3.0 ml of a 0.100% iodine solution, and diluted to 100 ml with distilled water. The iodine solution is prepared by adding 2.0 ml of a 5.00% iodine solution (10 grams potassium iodide plus 5.00 grams resublimed iodine diluted to 100 ml with distilled water) to 4 ml of 5M acetic acid and diluting to 100 ml with distilled water. A second 1.0 ml aliquot is removed at exactly 13 minutes from the reaction mixture and treated as above. Absorbance of each sample is determined at 650 nanometers (nm) in a 1 centimeter cell.

Activity of the acid stable alpha-amylase is calculated as follows:

$$AU/(ml \text{ or } gram) = 0.2303 \log\left(\frac{\text{Absorbance, 3 min}}{\text{Absorbance, 13 min}}\right)F$$

where

F = the dilution factor used in preparing the diluted enzyme, as determined from the following information:

| Estimated Activity (alpha-amylase units per ml or gram | Dilute | Dilution Factor (F) |
| --- | --- | --- |
| 0.1 or less | -- | 1 |
| 0.11 - 0.25 | 40 to 100 ml | 2.5 |
| 0.26 - 0.50 | 10 to 100 ml | 5 |
| 0.51 - 1.0 | 10 to 100 ml | 10 |
| 1.1 - 2.5 | 40 to 1000 ml | 25 |
| 2.6 - 5.0 | 20 to 1000 ml | 50 |
| 5.1 - 10.0 | 10 to 1000 ml | 100 |

In practicing this invention, the acid-stable microbial alpha-amylase enzyme preparations are employed as adjuncts to flour used for baking purposes. The enzyme is used at a level of from 0.1 to 10, preferably 0.17 to 5.5 and most preferably 1 to 4 alpha-amylase units per gram of flour.

The alpha-amylase enzyme preparation can be employed as a concentrated aqueous solution or as a solid. In the baking process, the enzyme can be added to either the flour or water during the mixing operation.

Bakery goods prepared in accordance with the process of this invention show good antistaling properties and remain softer longer as measured by a Voland Penetrometer. Typical improvement in softness is about 20 to 75% after about 5 to 6 days storage. Additional benefits of the enzyme are reduced mix time after dough pickup, reduced proofing time, improved dough handling during dividing and forming, and increased loaf volume on the order of about 5 to 10%. Mix times after dough pickup can be reduced by up to about 50%. By "dough pickup" is meant the point when flour and water are being mixed and the dough is first picked up as a mass by the blades of the dough mixer.

Another benefit of the enzyme is its ability to reduce or eliminate the addition of other ingredients such as dough conditioners i.e., sodium stearyl lactylate, and softening agents, such as monoglycerides, diglycerides and other emulsifiers.

The following examples illustrate specific embodiments of the present invention. In the examples and throughout the specification, all parts and percentages are by weight, unless otherwise indicated.

EXAMPLE 1

A small plant scale baking trial was carried out using a plain white bread formula and a straight dough process.

Bread was baked in 158.9 kg (350 pound) batches using freshly milled and unmalted flour in the following basic white bread formula:

| Ingredients | Weight Percent |
|---|---|
| Flour | 61.22 |
| Water | 34.07 |
| Yeast | 2.10 |
| Sugar | 1.70 |
| Salt | 0.91 |
| | 100.00 TOTAL |

Varying amounts of acid-stable microbial alpha-amylase enzyme were added to the basic formula to determine the effect of the alpha-amylase on the properties of the product. For control purposes, one batch was run using freshly milled white bread flour containing neither malted barley or fungal amylase. In another batch, 7741 units per 100 pounds of flour (0.17 units/gram of flour) of Multifresh™ baking carbohydrase (Enzyme Bio-Systems Ltd., Englewood Cliffs, NJ), an acid-stable microbial alpha-amylase of Aspergillus niger was added, and in another batch, 250,000 units per 100 pounds of flour (5.5 units/gram of flour) of Multifresh™ baking carbohydrase was added.

The dough was mixed in accordance with standard methods of the American Institute of Baking and transferred to a bread divider by use of a dough trough. Loaves of approximately 411 g (14.5 ounces) were made for all batches. There was a 10 minute proof step between dividing and molding. The loaves were deposited into bread pans and transferred to a continuous proofer. The proofing conditions were kept constant for all batches.

The loaves were baked in a 6 zone Universal Oven (Universal Oven Company, Westbury, Long Island) having a baking chamber 80 feet long by 12 feet wide. The oven profile and baking times were kept constant for all batches. The loaves were packaged in clear plastic bags and closed with tab locks. Samples for shelf life studies were stored at room temperature.

Freshness tests were determined by means of a Voland Penetrometer (Voland Company, Hawthorne, NY), having a 2.54 cm (1 inch) flat probe (Voland designation-TA 11). Each of the loaves were sliced into uniform segments. Each segment was placed in the penetrometer set for 5 millimeter penetration at a speed of 2 millimeters per second. The procedure was consistent with that disclosed in an article by Baker et al. "Comparison of Bread Firmness Measurements by Four Instruments" in CEREAL FOODS WORLD, pages 486 to 489, vol. 32, No. 7, (July 1987). The results for each of the slices of bread produced from the various doughs are given in Table 1 which follows:

TABLE 1

| VOLAND PENETROMETER LOAD (GRAMS) [a] | | |
|---|---|---|
| Storage Time (Days) | Control | Multifresh™ |
| | | 0.17 units/gram | 5.5 units/gram |
| 1 | 539±107 | 518±122 | 165±31 |
| 2 | 554±123 | 594±80 | 201±48 |
| 3 | 687±107 | 547±135 | 218±71 |
| 4 | 660±159 | 481±96 | 159±42 |
| 5 | 838±198 | 466±91 | 178±19 |
| 6 | 921±207 | 710±210 | 252±40 |

(a) - Average of 15 determinations

As can be seen from the results of Table 1, the bread with 0.17 units/gram of the inventive acid stable alpha-amylase remained softer longer than the control. The bread baked with a dosage of 5.5 units/gram remained softer longer than the dosage of 0.17 units/gram bread.

EXAMPLE 2

The general procedure of Example 1 was repeated except that the dough sizes were 227 kg (500 pounds) and used flour that contained malted barley (0.05%). One run of dough incorporated about 120,000 units of Multifresh™ baking carbohydrase acid stable alpha-amylase from Aspergillus niger per 100 pounds of flour (2.6 units/gram). A second run incorporated 250,000 units of the Multifresh™ baking carbohydrase acid stable alpha-amylase from Aspergillus niger per 100 pounds of flour (5.5 units/gram) in the dough. The results of these tests are given in Table 2 as follows:

TABLE 2

| VOLAND PENETROMETER LOAD (GRAMS) [b] | | | |
|---|---|---|---|
| Storage Time (Days) | Control | Multifresh™ | |
| | | 2.6 units/gram | 5.5 units/gram |
| 1 | 258±37 | 109±51 | 66±29 |
| 2 | 331±121 | 117±101 | 113±68 |
| 3 | 342±124 | 183±80 | 129±63 |
| 4 | 510±106 | 170±76 | 129±69 |
| 5 | 610±96 | 338±57 | 229±46 |

(b) - Average of 15 determinations

The results shown in Table 2 demonstrate that increased amounts of acid stable alpha-amylase result in increased improvements in shelf life based on the Voland Penetrometer load test.

**Claims**

1. A process for making bakery products having retarded staling properties through addition of an $\alpha$-amylase enzyme, the improvement comprising incorporating an acid stable $\alpha$-amylase enzyme derived from black Aspergilli which becomes inactive during the baking process at temperatures above 70°C.

2. The process of claim 1, wherein the $\alpha$-amylase enzyme has optimum activity at a pH of 3.0 to 5.0 at a temperature of 60 to 70°C.

3. The process of claim 1, wherein the microbial alpha-amylase enzyme has optimum activity at a pH of 3.5 to 4.5 at a temperature of 65 to 70°C.

4. The process of claim 1, wherein the black Aspergilli is selected from the group consisting of Aspergillus awamori, Aspergillus usami, Aspergillus niger, Aspergillus saitoi, Aspergillus inui, Aspergillus aureus and Aspergillus nakazawai.

5. The process of claim 4, wherein the black Aspergilli is Aspergillus niger.

6. The process of claim 1, wherein the enzyme is used at a level of from 0.1 to 10 alpha-amylase units per gram of flour.

7. The process of claim 6, wherein the enzyme level varies from 0.17 to 5.5 alpha-amylase units per gram of flour.

8. The process of claim 7, wherein the enzyme level varies from 1 to 4 alpha-amylase units per gram of flour.

EP 0 403 553 B1

9. The process of claim 1, wherein the bakery product is bread.

**Patentansprüche**

1. Verfahren zur Herstellung von Backwaren mit verzögertem Altbackenwerden durch Zusatz eines α-Amylaseenzyms, dadurch gekennzeichnet, dass ein säurefestes α-Amylaseenzym einverleibt wird, das von schwarzem Aspergilli abgeleitet ist, die während des Backvorganges bei Temperaturen von über 70°C inaktiv werden.

2. Verfahren nach Anspruch 1, dadurch gekennzeichnet, dass das α-Amylaseenzym seine optimale Aktivität bei einem pH von 3,0 bis 5,0 bei einer Temperatur von 60 bis 70°C besitzt.

3. Verfahren nach Anspruch 1, dadurch gekennzeichnet, dass das mikrobielle α-Amylaseenzym seine optimale Aktivität bei einem pH von 3,5 bis 4,5 bei einer Temperatur von 65 bis 70°C. besitzt.

4. Verfahren nach Anspruch 1, dadurch gekennzeichnet, dass der schwarze Aspergilli ausgewählt ist aus der Gruppe bestehend aus Aspergillus awamori, Aspergillus usami, Aspergillus niger, Aspergillus aureus und Aspergillus nakazawai.

5. Verfahren nach Anspruch 4, dadurch gekennzeichnet, dass der schwarze Aspergilli Aspergillus niger ist.

6. Verfahren nach Anspruch 1, dadurch gekennzeichnet, dass das Enzym in einer Menge von 0,1 bis 10 Alpha-Amylase-Einheiten pro Gramm Mehl verwendet wird.

7. Verfahren nach Anspruch 6, dadurch gekennzeichnet, dass die Enzymmenge von 0,17 bis 5,5 Alpha-Amylase-Einheiten pro Gramm Mehl variiert.

8. Verfahren nach Anspruch 7, dadurch gekennzeichnet, dass die Enzymmenge von 1 bis 4 Alpha-Amylase-Einheiten pro Gramm Mehl variiert.

9. Verfahren nach Anspruch 1, dadurch gekennzeichnet, dass das Backprodukt Brot ist.

**Revendications**

1. Procédé de préparation de produits de boulangerie ayant des propriétés de rassissement améliorées par addition d'un enzyme du type α-amylase, le perfectionnement comprenant l'incorporation d'un enzyme du type α-amylase stable en milieu acide, dérivé d'Aspergilli noirs qui deviennent inactifs au cours du procédé de cuisson au four à des températures supérieures à 70°C.

2. Procédé suivant la revendication 1, dans lequel l'enzyme du type α-amylase possède une activité optimale à un pH de 3,0 à 5,0 à une température de 60 à 70°C.

3. Procédé suivant la revendication 1, dans lequel l'enzyme du type α-amylase microbienne possède une activité optimale à un pH de 3,5 à 4,5 à une température de 65 à 70°C.

4. Procédé suivant la revendication 1, dans lequel l'espèce faisant partie des Aspergilli noirs est choisie dans le groupe consistant en Aspergillus awamori, Aspergillus usami, Aspergillus niger, Aspergillus saitoi, Aspergillus inui, Aspergillus aureus et Aspergillus nakazawai.

5. Procédé suivant la revendication 4, dans lequel l'espèce faisant partie des Aspergilli noirs est Aspergillus niger.

6. Procédé suivant la revendication 1, dans lequel l'enzyme est utilisé en une quantité de 0,1 à 10 unités d'α-amylase par gramme de farine.

7. Procédé suivant la revendication 6, dans lequel la quantité d'enzyme varie de 0,17 à 5,5 unités d'α-amylase par gramme de farine.

7

**8.** Procédé suivant la revendication 7, dans lequel la quantité d'enzyme varie de 1 à 4 unités d'$\alpha$-amylase par gramme de farine.

**9.** Procédé suivant la revendication 1, dans lequel le produit de boulangerie est le pain.